# DEMANDE DE BREVET EUROPEEN

(11) **EP 4 527 658 A1**
(43) Date de publication de la demande: **26.03.2025**
(21) Numéro de dépôt: 24201488.4
(22) Date de dépôt: 19.09.2024
(51) Int. Cl.: B60K 11/08

(54) **DISPOSITIF DE RÉGULATION DESTINÉ À RÉGULER UN FLUX D'AIR TRAVERSANT AU MOINS UNE ZONE SITUÉE À L'AVANT D'UN VÉHICULE AUTOMOBILE**

(30) Priorité: 21.09.2023 FR 2310015
(71) Demandeur: Renault s.a.s, 92100 Boulogne Billancourt (FR)
(72) Inventeur: ANNETTE, Richard, 78280 GUYANCOURT (FR)

(57) **Abrégé**

Dispositif (10) de régulation destiné à réguler un flux d'air traversant au moins une zone située à l'avant d'un véhicule automobile, caractérisé en ce que le dispositif de régulation comprend
• un ensemble d'au moins deux volets (111, 112, 113, 114, 115, 116, 117, 118, 119), chaque volet de l'ensemble présentant un axe de rotation,
• un système de commande (13) comprenant un unique moteur (131) relié directement ou indirectement à une extrémité de chaque volet de l'ensemble, le système de commande étant apte à disposer simultanément tous les volets de l'ensemble selon un même angle d'inclinaison,
et en ce qu'au moins un premier volet et un deuxième volet de l'ensemble sont de longueurs différentes, une longueur d'un volet étant mesurée selon l'axe de rotation du volet.

## Description

L'invention concerne un dispositif de régulation destiné à réguler un flux d'air traversant au moins une zone située à l'avant d'un véhicule automobile. L'invention porte aussi sur un véhicule équipé d'un tel dispositif.

Afin de refroidir le bloc moteur d'un véhicule automobile, les véhicules comprennent des cassettes de volets disposées entre l'avant du véhicule et le radiateur, permettant à un air extérieur de traverser au moins une zone située à l'avant du véhicule automobile pour atteindre un radiateur et ainsi refroidir un fluide circulant dans le radiateur.

Toutefois les cassettes de volets existantes présentent des inconvénients. Notamment, elles ne permettent pas d'optimiser à moindre coût la surface de pénétration de l'air en fonction d'une géométrie de l'au moins une zone traversée par le flux d'air.

Le but de l'invention est de fournir un dispositif de régulation remédiant aux inconvénients ci-dessus et améliorant les dispositifs de régulation connus de l'art antérieur. En particulier, l'invention permet de réaliser un dispositif de régulation qui soit économique à réaliser et qui permette d'optimiser la surface de pénétration de l'air, en fonction d'une géométrie de l'au moins une zone traversée par le flux d'air.

A cet effet l'invention porte sur un dispositif de régulation destiné à réguler un flux d'air traversant au moins une zone située à l'avant d'un véhicule automobile, notamment l'au moins une zone comprenant un bouclier avant et/ou une calandre, le dispositif de régulation comprenant
- un ensemble d'au moins deux volets, chaque volet de l'ensemble présentant un axe de rotation,
- un système de commande comprenant un unique moteur relié directement ou indirectement, notamment par l'intermédiaire d'au moins une tringle, à une extrémité de chaque volet de l'ensemble, le système de commande étant apte à disposer simultanément tous les volets de l'ensemble selon un même angle d'inclinaison,
et en ce qu'au moins un premier volet et un deuxième volet de l'ensemble sont de longueurs différentes, une longueur d'un volet étant mesurée selon l'axe de rotation du volet.

Dans un mode de réalisation, le dispositif comprend un cadre délimitant un premier espace dans lequel tous les volets de l'ensemble sont contenus et l'unique moteur est disposé à l'extérieur du premier espace.

Dans un mode de réalisation, le cadre est de forme polygonale et chaque volet de l'ensemble s'étend entre un premier côté et un deuxième côté du cadre.

Dans un mode de réalisation, les axes de rotation des volets de l'ensemble sont parallèles entre eux.

Dans un mode de réalisation, une répartition des volets de l'ensemble selon une direction perpendiculaire aux axes de rotation des volets de l'ensemble n'est pas uniforme.

Dans un mode de réalisation, les volets de l'ensemble sont tous de longueurs différentes.

Dans un mode de réalisation,
- le cadre est de forme trapézoïdale,
- les volets de l'ensemble sont assemblés dans le cadre trapézoïdal de sorte que l'axe de rotation de chaque volet de l'ensemble est parallèle à une base du cadre trapézoïdal, et
- le premier côté et le deuxième côté du cadre sont deux côtés non parallèles du cadre trapézoïdal.

L'invention porte également sur un véhicule automobile comprenant un radiateur et un dispositif selon l'invention, le dispositif étant fixé à proximité d'une face du radiateur orientée vers un bouclier avant du véhicule automobile.

L'invention porte également sur un véhicule automobile comprenant en outre une traverse avant de pare-chocs, disposée entre le bouclier avant et le dispositif et la traverse avant de pare-chocs étant traversée par un premier plan sensiblement parallèle à un axe longitudinal et à un axe latéral du véhicule automobile.

De plus,
- le dispositif s'étend selon un deuxième plan sensiblement parallèle à l'axe latéral et un axe vertical du véhicule automobile, notamment un angle mesuré entre l'axe vertical et le plan est inférieur à 20 degrés, et
- une intersection du dispositif avec le premier plan se situe à l'intérieur d'un arc de cercle formé par une intersection de la traverse avant de pare-chocs avec le premier plan.

L'invention porte en outre sur un véhicule automobile selon l'invention, une première zone du dispositif délimitée par une projection orthogonale de la traverse avant de pare-chocs sur le deuxième plan étant dépourvue de volets.

Les dessins annexés représentent, à titre d'exemple, un mode de réalisation d'un dispositif selon l'invention.
La figure 1 représente schématiquement un véhicule automobile équipé d'un dispositif de régulation selon l'invention.
La figure 2 définit un repère orthonormé d'un véhicule automobile.
La figure 3 représente deux flux d'air destinés au refroidissement d'un radiateur d'un véhicule automobile équipé de l'invention.
La figure 4 représente schématiquement an agencement d'une traverse de pare-chocs et d'un dispositif de régulation dans un véhicule équipé d'un dispositif de régulation selon l'invention.
La figure 5 est une vue de face d'un véhicule équipé d'un dispositif de régulation selon l'invention.
La figure 6 est une vue de côté d'un véhicule équipé d'un dispositif de régulation selon l'invention.
La figure 7 est une vue de dessous d'un véhicule équipé d'un dispositif de régulation selon l'invention.
La figure 8 est une vue en perspective d'un mode de réalisation d'un dispositif de régulation selon l'invention.

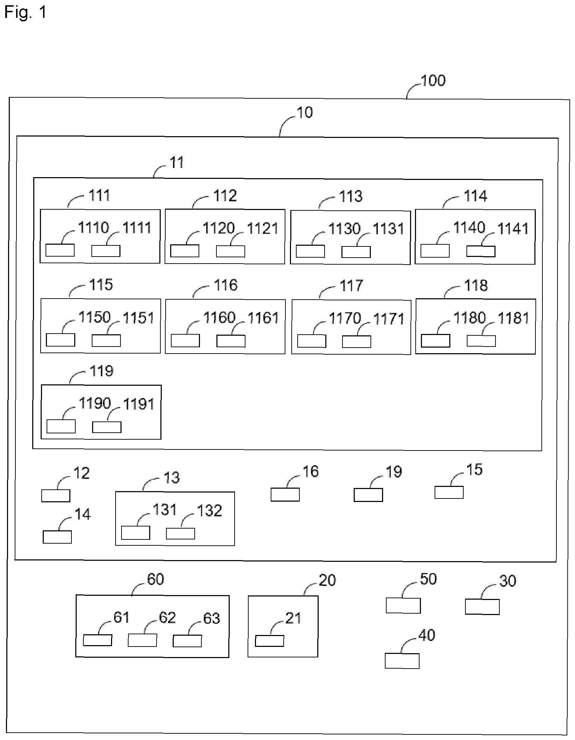

Un mode de réalisation d'un véhicule automobile 100 est décrit ci-après en référence à la figure 1. Le véhicule automobile 100 est un véhicule automobile de n'importe quel type, notamment un véhicule de tourisme ou un véhicule utilitaire.

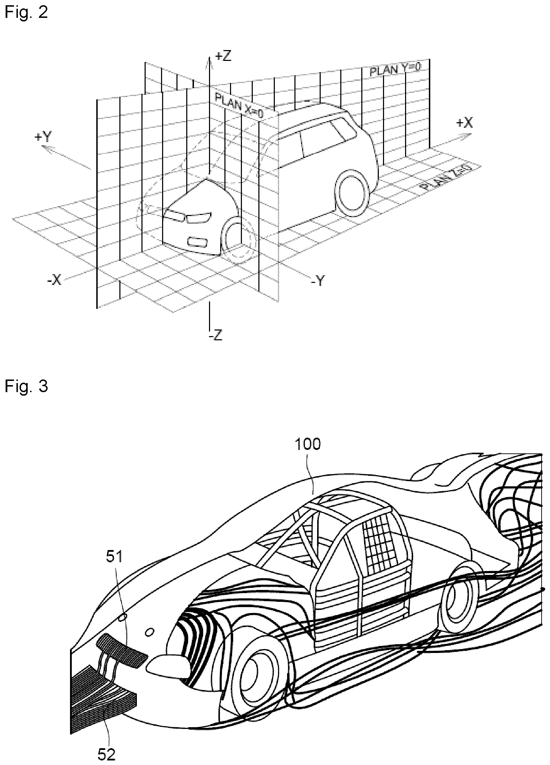

En référence à la figure 2, on définit un repère orthonormé utilisé dans la suite du document :
- L'axe dit axe longitudinal X du véhicule automobile 100 est défini comme un axe de symétrie du véhicule parallèle à l'axe selon lequel le véhicule se déplace en ligne droite, orienté vers l'arrière du véhicule.
- L'axe dit axe latéral Y du véhicule automobile 100 est perpendiculaire à l'axe longitudinal X déterminant avec l'axe X un plan XY parallèle à la surface sur laquelle le véhicule se déplace. L'axe latéral Y est orienté vers la droite du véhicule, la gauche et la droite étant définies selon le point de vue du conducteur.
- L'axe dit axe vertical Z du véhicule automobile 100 est perpendiculaire aux axes X et Y et est orienté vers le haut du véhicule automobile 100.

Le véhicule automobile 100 est préférentiellement un véhicule thermique comprenant un moteur thermique 50 et un radiateur 20. Le refroidissement du moteur 50 est assuré par une circulation de fluide de refroidissement dans un circuit de refroidissement comprenant un radiateur 20. Un échange thermique entre les parois du radiateur 20 et un air ambiant circulant au contact du radiateur 20 assure le refroidissement du fluide de refroidissement.

Le radiateur 20 est situé à l'avant du véhicule, derrière un pare-chocs 30 (également nommé « bouclier avant 30 ») et derrière une calandre 40 du véhicule automobile.

Afin d'optimiser l'efficacité du refroidissement du radiateur 20, le véhicule automobile 100 est équipé d'un dispositif 10 de régulation destiné à réguler un flux d'air traversant au moins une zone située à l'avant du véhicule automobile 100, notamment l'au moins une zone comprenant un bouclier avant 30 et/ou une calandre 40.

Le dispositif est avantageusement fixé à proximité d'une face 21 du radiateur 20, la face 21 étant orientée vers le bouclier avant 30 du véhicule automobile.

En d'autres termes, le dispositif 10 régule un premier flux d'air 51 traversant le bouclier avant 30 et un deuxième flux d'air 52 traversant la calandre 40. La figure 3 illustre le premier et le deuxième flux d'air 51, 52, le premier flux d'air 51 pouvant être nommé « entrée d'air basse 51 » et le deuxième flux d'air pouvant être nommé « entrée d'air haute 52 ». Dans le mode de réalisation présenté, une dimension du premier flux 51 d'air est supérieure à une dimension du deuxième flux d'air 52, les dimensions étant mesurées selon l'axe Y.

Ainsi, la solution mise en oeuvre par le dispositif 10 doit permettre d'augmenter la surface d'entrée d'air tout en tenant compte d'un espace disponible pour installer le dispositif 10 dans le véhicule automobile 100.

Une première contrainte relative à l'espace disponible pour installer le dispositif 10 porte sur la présence d'optiques 70 encadrant l'entrée d'air haute 52. La première contrainte limite donc une longueur des volets du dispositif 10 qui sont situés entre les optiques 70.

Or les volets situés en vis-à-vis de l'entrée d'air basse s'étendent avantageusement sur toute la longueur de l'entrée d'air basse.

En d'autres termes, afin de maximiser la surface d'entrée des deux flux d'air, les volets situés face à l'entrée d'air haute 52 sont nécessairement plus courts que des volets situés face à l'entrée d'air basse 51.

Ainsi, afin de réguler un flux d'air traversant la zone située à l'avant du véhicule automobile 100, le dispositif 10 comprend :
- un ensemble 11 d'au moins deux volets, chaque volet de l'ensemble présentant un axe de rotation,
- un système de commande 13 comprenant un unique moteur 131 relié directement ou indirectement, notamment par l'intermédiaire d'au moins une tringle 132, à une extrémité de chaque volet 111, 112, 113, 114, 115, 116, 117, 118, 119 de l'ensemble 11, le système de commande 13 étant apte à disposer simultanément tous les volets de l'ensemble selon un même angle d'inclinaison,
et au moins un premier volet et un deuxième volet de l'ensemble 11 sont de longueurs différentes, une longueur d'un volet étant mesurée selon l'axe de rotation du volet.

En d'autres termes, le dispositif 10 permet de commander, par l'intermédiaire d'un seul moteur, un angle d'inclinaison d'un ensemble de volets 11, l'ensemble de volets comprenant au moins deux volets de longueurs différentes.

Avantageusement, le dispositif 10 comprend un cadre 14 délimitant un premier espace 15 dans lequel tous les volets de l'ensemble 11 sont contenus et l'unique moteur 131 est disposé à l'extérieur du premier espace 15. Dans un mode de réalisation, tout le système de commande 13 est disposé à l'extérieur de l'espace 15. Un tel positionnement du moteur 131 ou du système de commande 13 permet avantageusement de maximiser la surface de prise d'air, par rapport à un dispositif qui placerait le moteur à l'intérieur du cadre 14 et qui masquerait alors une zone de la surface de prise d'air. De plus, la disposition du moteur 131 en dehors du cadre 14, notamment sur un bord extérieur du cadre 14, est moins susceptible d'entrainer des blessures importantes lors d'un choc entre le véhicule automobile 100 et un piéton.

Dans un mode de réalisation, le véhicule automobile comprend en outre une traverse avant de pare-chocs 60, disposée entre le bouclier avant 30 et le dispositif 10 et traversée par un premier plan P1 sensiblement parallèle à un axe longitudinal X et à un axe latéral Y du véhicule automobile,
- le dispositif 10 s'étendant selon un deuxième plan P2 sensiblement parallèle à l'axe latéral Y et un axe vertical Z du véhicule automobile 100, notamment un angle mesuré entre l'axe vertical (Z) et le plan (P2) est inférieur à XX degrés, et
- une intersection du dispositif 10 avec le premier plan P1 se situant à l'intérieur d'un arc de cercle formé par une intersection de la traverse avant de pare-chocs 60 avec le premier plan P1.

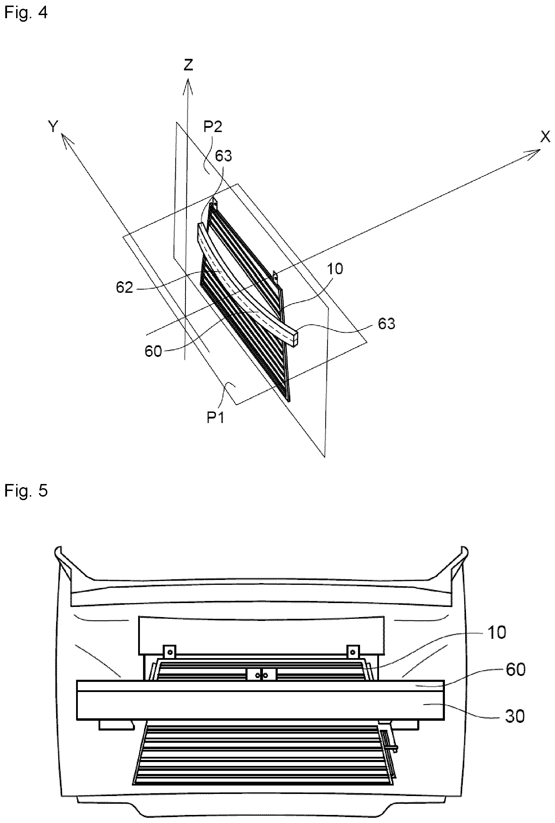

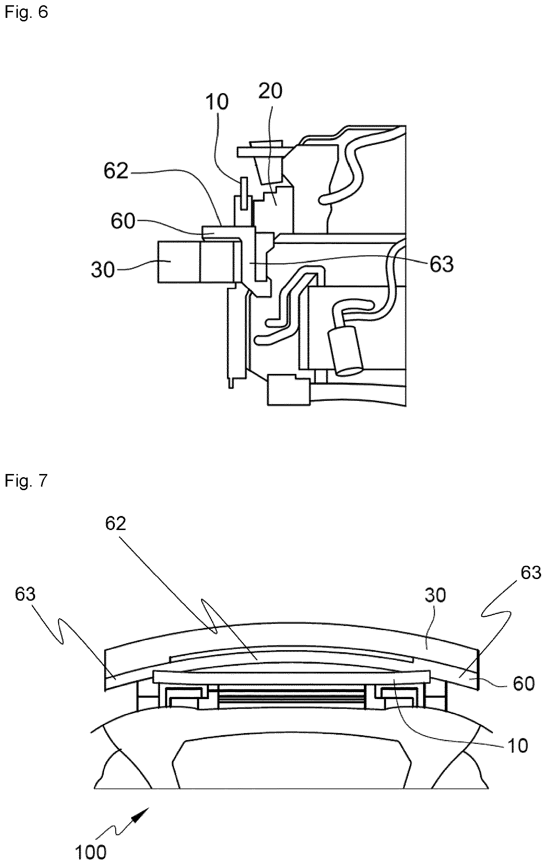

En particulier, la figure 4 permet de visualiser un premier plan P1 parallèle aux axes longitudinal X et latéral Y du véhicule automobile 100, le premier plan P1 coupant la traverse 60. L'intersection entre le premier plan P1 et la traverse 60 définit un profil incurvé. Dans le mode de réalisation illustré par les figures 4 à 7, le dispositif 10 de régulation selon l'invention est disposé entre la traverse avant 60 et le radiateur 20.

Le dispositif 10 est disposé à proximité d'une face avant 21 du radiateur 20. Avantageusement, le dispositif 10 selon l'invention s'étend selon une surface principale dont la forme épouse la forme de la face avant 21 du radiateur.

Dans le mode de réalisation présenté,
- le dispositif 10 selon l'invention s'étend selon une surface principale plane et située dans le deuxième plan P2, et
- le radiateur 20 est sensiblement en forme de parallélépipède rectangle, et la face avant 21 du radiateur 20 est plane et située dans un troisième plan sensiblement parallèle aux axes latéral Y et vertical Z du véhicule automobile 100.

Les figures 5 à 8 illustrent un ensemble de contraintes géométriques induites par la traverse avant 60 et le radiateur 20 sur la forme du dispositif 10, le dispositif 10 devant s'insérer entre la traverse avant 60 et le radiateur 20.

En particulier, du fait de sa forme incurvée selon le plan P1, la traverse avant 60 traverse le plan P2 selon lequel s'étend le dispositif 10. En d'autres termes, la traverse avant 60 se situe en grande partie -notamment dans sa partie centrale 62- à l'avant du deuxième plan P2 selon lequel s'étend le dispositif 10, tandis que les extrémités 63 de de la traverse avant 60 se situent en arrière du deuxième plan P2. Cette contrainte impose ainsi un cintrage d'une zone médiane 16 du dispositif 10, la zone médiane 16 étant placée à l'intérieur d'un arceau formé par la traverse avant 60.

Dans un mode de réalisation du dispositif 10, les axes de rotation des volets de l'ensemble sont parallèles entre eux. En complément, une répartition des volets selon une direction perpendiculaire aux axes de rotation des volets de l'ensemble peut être non uniforme.

Par exemple, dans le mode de réalisation de l'invention représenté par la figure 4, la zone médiane 16 peut être dépourvue de volets. En effet, la zone médiane 16 étant située derrière la traverse avant 60, elle reçoit peu d'air. De plus, l'absence de volets permet de réduire l'encombrement de la zone médiane 16 et ainsi d'optimiser l'espace requis pour installer le dispositif 10.

Ainsi, il peut être avantageux qu'une première zone 16 du dispositif 10 délimitée par une projection orthogonale de la traverse 60 sur le deuxième plan P2 soit dépourvue de volets.

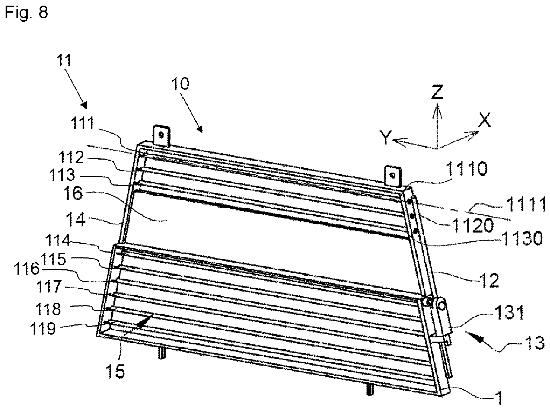

La figure 8 illustre un mode de réalisation d'un dispositif 10. Dans ce mode de réalisation, le dispositif 10 comprend un ensemble 11 de volets fixés sur un cadre 14. Le premier ensemble 11 comprend trois volets 111, 112, 113 situés en partie haute, et six volets 114, 115, 116, 117, 118, 119 situés en partie basse.

Dans ce mode de réalisation, le cadre 14 est de forme trapézoïdale. Les volets de l'ensemble 11 sont assemblés dans le cadre trapézoïdal de sorte que l'axe de rotation de chaque volet de l'ensemble est parallèle à une base du cadre trapézoïdal. De plus, le premier côté et le deuxième côté du cadre 14 sont deux côtés non parallèles du cadre trapézoïdal 14. Par ailleurs, les volets de l'ensemble 11 sont tous de longueurs différentes.

Plus généralement, le cadre 14 peut être de forme polygonale, chaque volet s'étendant entre un premier et un deuxième côté du cadre 14. Les axes de rotation des volets de l'ensemble peuvent être parallèles ou non parallèles entre eux. Les volets de l'ensemble 11 peuvent être tous de longueurs différentes ou bien certains volets pris parmi l'ensemble 11 peuvent être de même longueur.

Selon une variante de réalisation du dispositif 10, le dispositif comprend des premier et second ensembles de volets fixés sur un cadre. Le premier ensemble comprend plusieurs volets situés en partie haute, notamment trois volets, et le second ensemble de volets est situé en partie basse. Le second ensemble de volets comprend un nombre de volets supérieur au premier ensemble de volets. Par exemple, le second ensemble de volets peut comprendre six volets. Les premier et second ensembles de volets peuvent être pilotés séparément l'un de l'autre.

Finalement, le dispositif selon l'invention permet de maximiser la surface de prise d'air destinée au refroidissement du radiateur d'un véhicule automobile.

Pour cela, le dispositif selon l'invention comprend des volets de longueurs différentes, ce qui permet de maximiser la surface de prise d'air tout en adaptant l'encombrement du dispositif aux contraintes d'intégration du dispositif dans le véhicule.

En particulier, la forme géométrique du dispositif selon l'invention est définie pour qu'il s'intègre à l'intérieur d'un arc de cercle formé par la traverse de pare-chocs.

De plus,
- les longueurs des volets situés dans la partie supérieure du dispositif selon l'invention sont définies de sorte à permettre une intégration de la partie supérieure du dispositif entre les optiques du véhicule, et
- les longueurs des volets situés dans la partie inférieure du dispositif selon l'invention sont définies de sorte à maximiser la prise d'air au niveau d'un bouclier du véhicule.

La maximisation de la surface de prise d'air est également obtenue en plaçant le moteur du dispositif à l'extérieur d'un cadre sur lequel les volets sont fixés. En effet, la fixation du moteur à l'extérieur du cadre évite que le moteur ne masque une zone de la surface de prise d'air du dispositif selon l'invention. Par ailleurs, la fixation du moteur sur le côté du cadre réduit le risque d'entrainer des blessures lors d'un choc entre le véhicule automobile 100 et un piéton.

En outre, le fait que le dispositif selon l'invention comprenne un seul moteur permet de réduire le coût de mise en oeuvre de l'invention.

## Revendications

1. Dispositif (10) de régulation destiné à réguler un flux d'air traversant au moins une zone située à l'avant d'un véhicule automobile (100), notamment l'au moins une zone comprenant un bouclier avant (30) et/ou une calandre (40), **caractérisé en ce que** le dispositif de régulation comprend
• un ensemble (11) d'au moins deux volets (111, 112, 113, 114, 115, 116, 117, 118, 119), chaque volet de l'ensemble présentant un axe de rotation (1111, 1121, 1131, 1141, 1151, 1161, 1171, 1181, 1191),
• un système de commande (13) comprenant un unique moteur (131) relié directement ou indirectement, notamment par l'intermédiaire d'au moins une tringle (12), à une extrémité (1110, 1120, 1130, 1140, 1150, 1160, 1170, 1180, 1190) de chaque volet de l'ensemble (11), le système de commande (13) étant apte à disposer simultanément tous les volets de l'ensemble (11) selon un même angle d'inclinaison,
et **en ce qu'**au moins un premier volet (111, 112, 113, 114, 115, 116, 117, 118, 119) et un deuxième volet (111, 112, 113, 114, 115, 116, 117, 118, 119) de l'ensemble (11) sont de longueurs différentes, une longueur d'un volet étant mesurée selon l'axe de rotation du volet.

2. Dispositif selon la revendication précédente, **caractérisé en ce qu'**il comprend un cadre (14) délimitant un premier espace dans lequel tous les volets de l'ensemble (11) sont contenus et **en ce que** l'unique moteur (131) est disposé à l'extérieur du premier espace.

3. Dispositif selon la revendication précédente, **caractérisé en ce que** le cadre (14) est de forme polygonale et **en ce que** chaque volet de l'ensemble (11) s'étend entre un premier côté et un deuxième côté du cadre (14).

4. Dispositif selon l'une des revendications précédentes, **caractérisé en ce que** les axes de rotation (1111, 1121, 1131, 1141, 1151, 1161, 1171, 1181, 1191) des volets de l'ensemble (11) sont parallèles entre eux.

5. Dispositif (10) selon la revendication précédente, **caractérisé en ce qu'**une répartition des volets de l'ensemble (11) selon une direction perpendiculaire aux axes de rotation des volets de l'ensemble (11) n'est pas uniforme.

6. Dispositif (10) selon l'une des revendications précédentes, **caractérisé en ce que** les volets de l'ensemble (11) sont tous de longueurs différentes.

7. Dispositif (10) selon la revendication 3 ou selon l'une des revendications 4 à 6 prise en combinaison avec la revendication 3, **caractérisé en ce que** :
- le cadre (14) est de forme trapézoïdale,
- les volets de l'ensemble (11) sont assemblés dans le cadre trapézoïdal (14) de sorte que l'axe de rotation de chaque volet de l'ensemble (11) est parallèle à une base du cadre trapézoïdal (14), et
- le premier côté et le deuxième côté du cadre (14) sont deux côtés non parallèles du cadre trapézoïdal (14).

8. Véhicule automobile comprenant un radiateur (20) et un dispositif (10) selon l'une des revendications précédentes, le dispositif (10) étant fixé à proximité d'une face (21) du radiateur (20) orientée vers un bouclier avant (30) du véhicule automobile (100).

9. Véhicule automobile selon la revendication précédente comprenant en outre une traverse avant de pare-chocs (60), disposée entre le bouclier avant (30) et le dispositif (10) et la traverse avant de pare-chocs (60) étant traversée par un premier plan (P1) sensiblement parallèle à un axe longitudinal (X) et à un axe latéral (Y) du véhicule automobile, **caractérisé en ce que**
- le dispositif (10) s'étend selon un deuxième plan (P2) sensiblement parallèle à l'axe latéral (Y) et un axe vertical (Z) du véhicule automobile (100), notamment un angle mesuré entre l'axe vertical (Z) et le plan (P2) est inférieur à 20 degrés,
- **en ce qu'**une intersection du dispositif (10) avec le premier plan (P1) se situe à l'intérieur d'un arc de cercle formé par une intersection de la traverse avant de pare-chocs (60) avec le premier plan (P1).

10. Véhicule automobile selon la revendication précédente, **caractérisé en ce qu'**une première zone (16) du dispositif (10) délimitée par une projection orthogonale de la traverse avant de pare-chocs (60) sur le deuxième plan (P2) est dépourvue de volets.
